# FASCICULE DE BREVET EUROPEEN

(11) **EP 4 080 733 B1**
(45) Date de publication et mention de la délivrance du brevet: **04.11.2026**
(21) Numéro de dépôt: 22168634.8
(22) Date de dépôt: 15.04.2022
(51) Int. Cl.: H02K 1/32, H02K 5/20, H02K 5/128, H02K 5/16, H02K 9/06, H02K 9/19

(54) **MACHINE ÉLECTRIQUE À CANAL DE REFROIDISSEMENT ET STATOR ISOLÉ**
ELEKTRISCHE MASCHINE MIT EINEM KÜHLKANAL UND ISOLIERTER STATOR
ELECTRIC MACHINE WITH COOLING CHANNEL AND INSULATED STATOR

(30) Priorité: 19.04.2021 FR 2104037
(43) Date de publication de la demande: 26.10.2022
(73) Titulaire: ALSTOM Holdings, 93400 Saint-Ouen-sur-Seine (FR)
(72) Inventeur: PAULIN, Hervé, 25290 ORNANS (FR)
(74) Mandataire: Plasseraud IP

(56) Documents cités:
- DE-A1- 102011 113 654
- DE-A1- 4 320 559
- JP-A- 2007 124 796
- SU-A1- 484 602
- US-B2- 7 462 964

## Description

La présente invention concerne le domaine des machines électriques, par exemple pour la traction d'un véhicule tel qu'un véhicule ferroviaire ou automobile.

De telles machines électriques sont connues des documents US 7 462 964 B2, JP 2007 124796 A, DE 43 20 559 A1, SU 484 602 A1 et DE 10 2011 113654 A1.

DE 101 22 425 A1 divulgue une machine électrique comprenant un carter, un stator monté fixe à l'intérieur du carter, et un rotor comprenant un arbre monté rotatif à l'intérieur du carter autour d'un axe central et un circuit magnétique porté par l'arbre. Le rotor comprend des canaux de refroidissement s'étendant axialement à l'intérieur du circuit magnétique du rotor.

Le carter comprend des orifices d'entrée, situés sur un des flasques du carter pour l'entrée d'air de refroidissement à l'intérieur du carter en vue de sa circulation dans chaque canal de refroidissement, et des orifices de sortie, situés sur l'autre flasque du carter pour la sortie, vers l'extérieur du carter, de l'air de refroidissement ayant circulé dans chaque canal de refroidissement.

Cependant, la circulation d'air de refroidissement à travers le carter favorise le dépôt de poussière à l'intérieur du carter, en particulier entre le stator et le rotor, ce qui est susceptible de conduire à un court-circuit entre le stator et le rotor.

Un but de l'invention est donc de proposer une machine électrique qui puisse être refroidie en limitant les risques de dysfonctionnement.

À cet effet, l'invention a pour objet une machine électrique selon la revendication 1.

La présence du système d'étanchéité permet d'isoler le stator du fluide de refroidissement, ce qui limite le risque d'une contamination du stator par des éléments contaminant transportés par le fluide de refroidissement, en particulier la poussière transportée par l'air utilisé comme fluide de refroidissement.

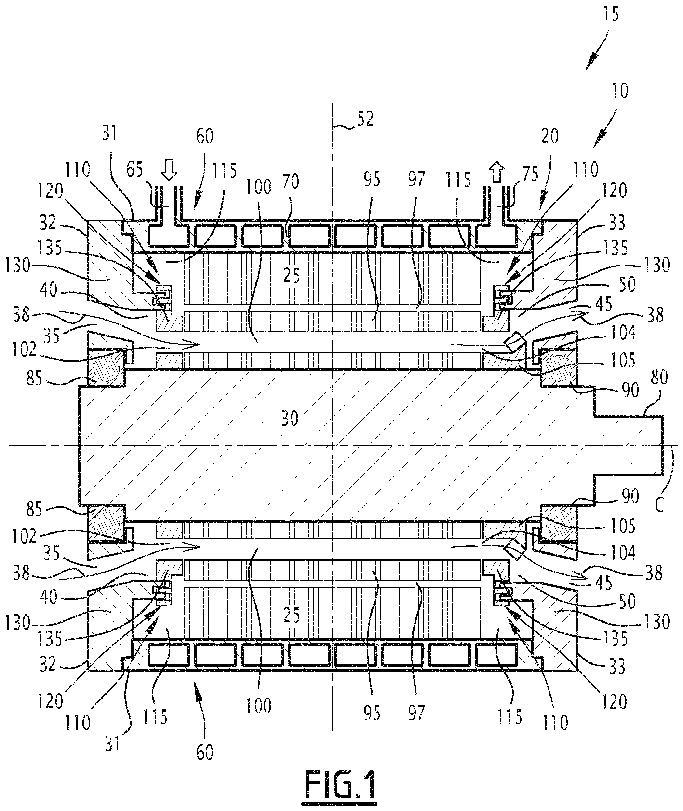

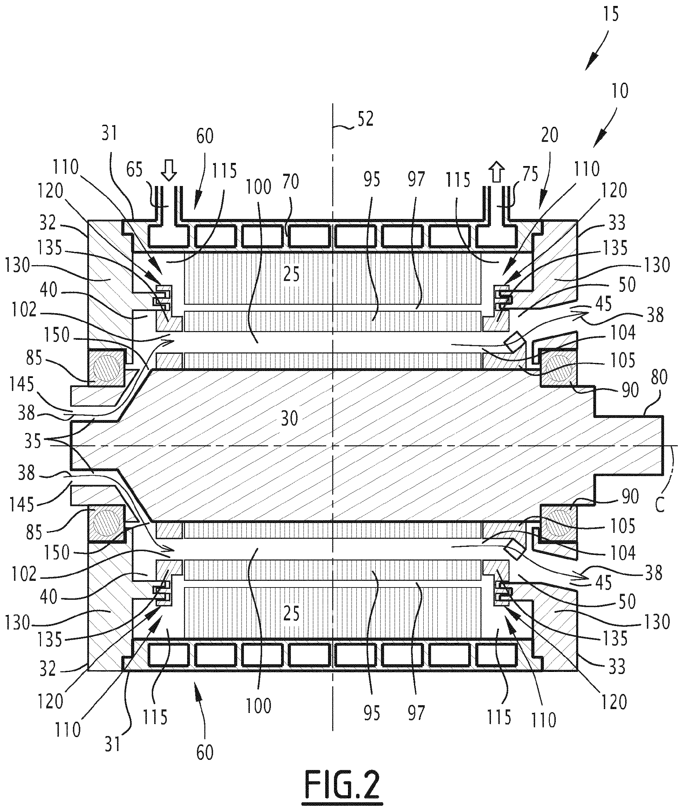

Des caractéristiques optionnelles sont définies aux revendications 2 à 9. L'invention et ses avantages seront mieux compris à la lecture de la description qui va suivre, donnée uniquement à titre d'exemple non limitatif, et faite en référence aux dessins annexés, sur lesquels les Figures 1 et 2 sont des vues en coupe d'une machine électrique selon différentes réalisations.

En référence à la figure 1, une machine électrique 10 est inclue dans un véhicule 15 ferroviaire ou automobile pour sa traction. La machine électrique 10 est par exemple un moteur synchrone, un moteur asynchrone, un moteur à courant continu ou un générateur électrique. Dans un exemple de réalisation préféré, la machine électrique 10 est un moteur asynchrone.

La machine électrique 10 comporte un carter 20, un stator 25 monté fixe par rapport au carter 20, et un rotor 30 monté mobile en rotation autour d'un axe central C par rapport au carter 20.

Le carter 20 définit un volume intérieur. Le stator 25 et le rotor 30 sont reçus à l'intérieur du carter 20, dans le volume intérieur.

Le carter 20 comprend une carcasse 31 de forme générale tubulaire s'étendant selon l'axe central C, la carcasse 31 étant fermée à ses extrémités axiales par un premier flasque 32 et un deuxième flasque 33. La carcasse 31 présente par exemple une surface interne de section transversale sensiblement circulaire.

Le stator 25 est monté fixe sur la carcasse 31 du carter 20, et entoure le rotor 30 qui est monté rotatif sur les flasques 32 et 33 du carter 20.

Le carter 20 comprend au moins un orifice d'entrée 35 pour l'entrée d'un fluide de refroidissement 38 de l'extérieur vers l'intérieur du carter 20. Chaque orifice d'entrée 35 est par exemple ménagé dans le premier flasque 32. Deux orifices d'entrée 35 diamétralement opposés par rapport à l'axe central C sont visibles sur la Figure 1.

Le fluide de refroidissement 38, qui est par exemple de l'air, est destiné au refroidissement du rotor 30, en particulier au refroidissement d'un circuit magnétique du rotor 30, comme cela sera décrit par la suite.

Un espace d'entrée 40 est délimité à l'intérieur du carter 20, chaque orifice d'entrée 35 débouche dans l'espace d'entrée 40.

Le carter 20 comprend au moins un orifice de sortie 45 pour la sortie du fluide de refroidissement 38 de l'intérieur vers l'extérieur du carter 20. Chaque orifice de sortie 45 est par exemple ménagé dans le deuxième flasque 33. Deux orifices de sortie 45 diamétralement opposés par rapport à l'axe central C sont visibles sur la Figure 1.

Un espace de sortie 50 est délimité à l'intérieur du carter 20, chaque orifice de sortie s'alimentant dans l'espace de sortie 50.

L'espace d'entrée 40 et l'espace de sortie 50 sont séparés l'un de l'autre.

Le carter 20 présente un plan transversal 52 médian, perpendiculaire à l'axe central C.

Chaque orifice d'entrée 35 est situé d'un côté du plan transversal 52 tandis que chaque orifice de sortie 45 est situé de l'autre côté du plan transversal 52.

Le carter 20 comprend un dispositif de refroidissement à liquide 60 destiné à faire circuler un liquide de refroidissement pour refroidir le stator 25. Le liquide de refroidissement est par exemple de l'eau.

Le dispositif de refroidissement à liquide 60 comporte une admission 65 de liquide de refroidissement alimentant un échangeur thermique 70 configuré pour la circulation du liquide de refroidissement avec des échanges thermiques avec le stator 25, et une évacuation 75 par laquelle le liquide de refroidissement est évacué après être passé par l'échangeur thermique 70.

Comme illustré sur la Figure 1, l'échangeur thermique 70 est par exemple formé de conduits ménagés dans la carcasse 31, pour réaliser des échanges de chaleur avec le stator 25 en contact avec la surface interne de la carcasse 31.

Le stator 25 comprend un circuit magnétique portant un ensemble d'enroulement(s) statorique(s) non-représenté. Chaque enroulement statorique est propre à produire un champ magnétique lorsqu'il est traversé par un courant électrique.

Le rotor 30 comporte un arbre 80 traversant le carter 20 suivant l'axe central C et monté rotatif autour de l'axe central C par rapport audit carter 20. L'arbre 80 est guidé en rotation par un roulement d'entrée 85 et un roulement de sortie 90 montés sur le carter 20 et centrés sur l'axe central C. Les roulements d'entrée 85 et de sortie 90 sont par exemple des roulements à billes ou à aiguilles.

Le roulement d'entrée 85 est monté sur le premier flasque 32 et le roulement de sortie 90 est monté sur le deuxième flasque 33.

Le rotor 30 comporte un circuit magnétique 95 monté fixe sur l'arbre 80. Le circuit magnétique 95 présente la forme d'un manchon tubulaire enfilé sur l'arbre 80. Le circuit magnétique 95 possède deux faces d'extrémité sensiblement radiales et une face latérale tournée vers le stator 25, qui définit un entrefer 97 avec le stator 25, plus particulièrement avec le circuit magnétique du stator 25.

Le circuit magnétique 95 est par exemple formé de manière connue d'un empilement alterné de disques en tôles et de disques en matériaux électriquement isolant. Le circuit magnétique 95 porte par exemple des aimants permanents. En variante, il porte un ensemble d'enroulement(s) rotorique(s), non-représenté, propre(s) à produire un champ magnétique à partir d'un courant électrique.

Le rotor 30 est muni de canaux de refroidissement 100 destinés à être traversés par le fluide de refroidissement 38.

Chaque canal de refroidissement 100 possède une extrémité d'entrée 102 s'alimentant dans l'espace d'entrée 40 et une extrémité de sortie 104 débouchant dans l'espace de sortie 50.

En fonctionnement, le fluide de refroidissement 38 entre dans le carter 20 par le(s) orifice(s) d'entrée 35, traverse le(s) canal(aux) de refroidissement 100 puis ressort par le(s) orifice(s) de sortie 45.

Les canaux de refroidissement 100 traversent par exemple axialement le circuit magnétique 95 de part en part, parallèlement à l'axe central C. Chaque canal de refroidissement 100 a son extrémité d'entrée 102 située sur une face d'extrémité du circuit magnétique 95 et son extrémité de sortie 104 sur l'autre face d'extrémité du circuit magnétique 95.

Le rotor 30 comprend plusieurs canaux de refroidissement 100 répartis autour de l'axe centrale C. Les canaux de refroidissement 100 sont avantageusement uniformément répartis autour de l'axe central C. Ainsi les canaux de refroidissement 100 sont régulièrement espacés angulairement autour de l'axe central C.

Les canaux de refroidissement 100, les orifices d'entrée 35 et les orifices de sortie 45 sont par exemple sensiblement à une même distance de l'axe central C de sorte que le fluide de refroidissement 38 circule sensiblement parallèlement à l'axe central C dans son cheminement des orifices d'entrée 35 aux orifices de sortie 45 en passant par les canaux de refroidissement 100.

La machine électrique 10 comprend un ventilateur 105 pour forcer la circulation du fluide de refroidissement 38 du(des) orifice(s) d'entrée 35 vers le(s) orifice(s) de sortie 45.

Le ventilateur 105 est par exemple monté fixe sur l'arbre 80, de façon à être entraîné en rotation du fait de la rotation du rotor 30.

Le ventilateur 105 est par exemple disposé axialement le long de l'arbre 80 entre le circuit magnétique 95 et les orifices de sortie 45.

La machine électrique 10 comprend un système d'étanchéité 110 configuré pour isoler un espace de réception 115 délimité à l'intérieur du carter 20 et dans lequel le stator 25 est reçu, d'une part, de l'espace d'entrée 40, et, d'autre part de l'espace de sortie 50.

Le système d'étanchéité 110 comprend par exemple deux joints d'étanchéité sans contact 120, chaque joint d'étanchéité sans contact 120 assurant l'étanchéité entre l'espace de réception 115 et respectivement l'un parmi l'espace d'entrée 40 et l'espace de sortie 50.

Chaque joint d'étanchéité sans contact 120 comporte une partie statique 130 montée sur le carter 20, par exemple sur un flasque 32 ou 33, et une partie mobile 135 montée sur le rotor 30, par exemple sur le circuit magnétique 95 du rotor 30.

La partie statique 130 et la partie mobile 135 de chaque joint d'étanchéité sans contact 120 coopèrent de manière étanche.

Chaque joint d'étanchéité sans contact 120 est par exemple un joint d'étanchéité à labyrinthe (ou « joint labyrinthe »).

La partie statique 130 et la partie mobile 135 du joint d'étanchéité sans contact 120 sous forme d'un joint d'étanchéité à labyrinthe définissent entre elles un passage tortueux, en particulier un passage présentant des chicanes. Ceci empêche ou limite le passage d'un fluide, en particulier lorsque la partie mobile 136 tourne, ce qui génère des forces centrifuges.

Le passage tortueux est par exemple défini des gorges annulaires et des nervures annulaires complémentaires prévues sur la partie statique 130 et la partie mobile 135, chaque nervure annulaire prévue sur l'une de la partie statique 130 et de la partie mobile 135 étant insérée dans une gorge annulaire prévue sur l'autre. Les nervures annulaires insérées dans les gorges annulaires forment des sortes de chicanes.

Dans un exemple, chaque partie fixe 130 est montée sur un du premier flasque 32 et du deuxième flasque 33 du carter 20 en étant plus éloignée de l'axe central C que les orifices d'entrée 35 ou de sortie 45 ménagés dans ce flasque 32 ou 33.

L'espace de réception 115 est un espace annulaire délimité entre le carter 20 et le rotor 30, plus particulièrement entre la carcasse 31 du carter 20 et le circuit magnétique 95 du rotor 30.

Le système d'étanchéité 110 guide le fluide de refroidissement 38 dans l'espace d'entrée 40, entre les orifices d'entrée 35 et les canaux de refroidissement 100, et dans l'espace de sortie 50, entre les canaux de refroidissement 100 et les orifices de sortie 45, en empêchant son passage vers l'espace de réception 115.

L'espace d'entrée 40 est un espace annulaire entourant l'extrémité du rotor 30 adjacente au premier flasque 32. L'espace de sortie 50 est un espace annulaire entourant l'extrémité rotor 30 adjacente au deuxième flasque 33.

Lors du fonctionnement de la machine électrique 10, le rotor 30 est entraîné en rotation. Le rotor 30 chauffe, ainsi que les roulements d'entrée 85 et de sortie 90.

La rotation du rotor 30 entraîne la rotation du ventilateur 105 qui provoque la circulation du fluide de refroidissement 38 des orifices d'entrée 35 vers les orifices de sortie 45, en passant successivement par l'espace d'entrée 40, les canaux de refroidissement 100 et l'espace de sortie 50.

En circulant à travers le(s) orifices d'entrée 35 et dans l'espace d'entrée 40, et à travers le(s) orifices de sortie 45 et dans l'espace de sortie 50, le fluide de refroidissement 38 permet le refroidissement du roulement d'entrée 85 et du roulement de sortie 95. En circulant à travers les canaux de refroidissement 100, il permet le refroidissement du rotor 30, en particulier de son circuit magnétique 95.

Lors de la circulation du fluide de refroidissement 38, le système d'étanchéité 110 canalise le fluide de refroidissement 38 vers ou à partir des canaux de refroidissement 100 et empêche ledit fluide de refroidissement 38 de pénétrer l'espace de réception 115.

Parallèlement à la circulation du fluide de refroidissement 38 destinée à refroidir le rotor 30 et les roulements d'entrée 85 et de sortie 90, le stator 25 est refroidi par le dispositif de refroidissement à liquide 60.

Avec la machine électrique 10 selon l'invention, le fluide de refroidissement 38 est empêché de circuler vers l'espace de réception 115 dans lequel est reçu le stator 25, et dans lequel se situe l'entrefer 97 entre le stator 25 et le rotor 30, ce qui limite l'entrée et le dépôt de poussière dans cet espace de réception 115.

L'utilisation de joints sans contact 120 pour le système d'étanchéité 110 permet d'éviter tout contact ou frottement entre la partie statique 130 et la partie mobile 135, ce qui conduirait à un échauffement dudit système d'étanchéité 110.

La présence d'un dispositif de refroidissement à liquide 60 du stator 25 est d'autant plus utile que le stator 25 est reçu dans l'espace de réception 115 qui est clos, rendant plus difficile les échanges thermiques.

Dans l'exemple de la figure 1, le(s) orifice(s) d'entrée 35 sont ménagés dans le premier flasque 32 et le(s) orifice(s) de sorties 45 sont ménagés dans le deuxième flasque 33.

Ceci permet de générer un flux de fluide de refroidissement 38 autour du roulement d'entrée 85 et autour du roulement de sortie 90 pour assurer leur refroidissement.

Dans un autre exemple de réalisation illustré sur la figure 2, couvert par les revendications, chaque orifice d'entrée 35 est ménagés dans l'arbre 80.

Chaque orifice d'entrée 35 s'étend à l'intérieur de l'arbre 80 en s'alimentant à une ouverture externe 145 située sur une surface de l'arbre 80 située à l'extérieur du carter 20 et une ouverture interne 150 située sur une surface de l'arbre 80 située dans l'espace d'entrée 40. L'ouverture externe 145 est située d'un côté du premier flasque 32, l'ouverture interne 150 étant située de l'autre côté du premier flasque 32.

L'ouverture externe 145 débouche par exemple parallèlement à l'axe central C, perpendiculairement à l'axe central C ou obliquement par rapport à l'axe central C.

L'ouverture interne 150 débouche par exemple obliquement par rapport à l'axe central C, par exemple suivant un angle sensiblement égal à 45°. L'ouverture interne 150 d'un orifice d'entrée 35 est par exemple angulairement aligné avec un canal de refroidissement 100 respectif.

Dans une telle variante, le roulement d'entrée 85 est refroidi par l'intermédiaire de l'arbre 80 qui est refroidi par la circulation du fluide de refroidissement 38 dans les orifices d'entrée 35. Dans l'exemple de réalisation de la Figure 2, couvert par les revendications, les orifices d'entrée 35 sont ménagés dans l'arbre 80 et les orifices de sortie 45 sont ménagés dans le deuxième flasque 33.

Il est possible de prévoir un autre exemple de réalisation dans lequel les orifices d'entrée 35 sont ménagés dans l'arbre 80 et les orifices de sortie 45 sont aussi ménagés dans l'arbre 80.

Chaque orifice de sortie 45 s'étend alors entre une ouverture interne 150 située sur une surface de l'arbre 80 délimitant l'espace de sortie 50 et une ouverture externe 145 située sur une surface de l'arbre 80 située à l'extérieur du carter 20.

Il est aussi possible de prévoir une configuration inverse de celle de la figure 2, dans laquelle les orifices d'entrée 35 sont ménagés dans le premier flasque 32 et les orifices de sortie 45 sont ménagés dans l'arbre 80.

Il est encore possible de prévoir à chaque extrémité de l'arbre 80 au moins un orifice d'entrée 35 ou de sortie 45 ménagé dans le flasque 32 ou 33 correspondant et au moins un orifice d'entrée 35 ou de sortie 45 ménagé dans l'arbre 80.

Ainsi, de manière générale, la machine électrique 10 comprend au moins un orifice d'entrée 35, chaque orifice d'entrée 35 étant ménagé dans l'arbre 80 ou dans le carter 20, de préférence dans le premier flasque 32, et au moins un orifice de sortie 45, chaque orifice de sortie 45 étant ménagé dans l'arbre 80 ou dans le carter 20, de préférence dans le deuxième flasque 33.

Dans les différents exemples de réalisation, la prévision d'orifices d'entrée 35 dans l'arbre 80 ou dans le premier flasque 32 favorise le refroidissement du roulement d'entrée 85 et la présence d'orifices de sortie dans l'arbre 80 ou le deuxième flasque 33 favorise le refroidissement du roulement de sortie 90.

## Revendications

1. Machine électrique (10) comprenant un carter (20), un stator (25) monté fixe à l'intérieur du carter (20), et un rotor (30) comprenant un arbre (80) monté rotatif à l'intérieur du carter (20) autour d'un axe central (C) et un circuit magnétique (95) porté par l'arbre (80), le rotor (30) étant muni d'au moins un canal de refroidissement (100) s'étendant à l'intérieur du rotor (30), la machine électrique (10) comprenant au moins un orifice d'entrée (35) pour l'entrée d'un fluide de refroidissement (38) à l'intérieur du carter (20) en vue de sa circulation dans chaque canal de refroidissement (100) et au moins un orifice de sortie (45) pour la sortie, vers l'extérieur du carter (20), du fluide de refroidissement (38) ayant circulé dans chaque canal de refroidissement (100),
comprenant un système d'étanchéité (110) configuré pour canaliser le fluide de refroidissement (38) entre ledit au moins un orifice d'entrée (35) et ledit au moins un canal de refroidissement (100) et canaliser le fluide de refroidissement (38) entre ledit au moins un canal de refroidissement (100) et ledit au moins un orifice de sortie (45), en prévenant l'entrée du fluide de refroidissement (38) dans un espace de réception (115) délimité à l'intérieur du carter (20) et dans lequel est reçu le stator (25), et dans laquelle le rotor (30) étant muni d'un ventilateur (105) agencé pour forcer la circulation du fluide de refroidissement (38) dans ledit au moins un canal de refroidissement (100) du fait de la rotation du rotor (30), dudit au moins un orifice d'entrée (35) vers ledit au moins un orifice de sortie (45), **caractérisé en ce que** au moins un parmi ledit au moins un orifice d'entrée (35) étant ménagé dans l'arbre (80), au moins un parmi ledit au moins un orifice de sortie (45) étant ménagé dans un flasque (33) du carter (20) supportant le roulement de sortie (90).

2. Machine électrique (10) comprenant un carter (20), un stator (25) monté fixe à l'intérieur du carter (20), et un rotor (30) comprenant un arbre (80) monté rotatif à l'intérieur du carter (20) autour d'un axe central (C) et un circuit magnétique (95) porté par l'arbre (80), le rotor (30) étant muni d'au moins un canal de refroidissement (100) s'étendant à l'intérieur du rotor (30), la machine électrique (10) comprenant au moins un orifice d'entrée (35) pour l'entrée d'un fluide de refroidissement (38) à l'intérieur du carter (20) en vue de sa circulation dans chaque canal de refroidissement (100) et au moins un orifice de sortie (45) pour la sortie, vers l'extérieur du carter (20), du fluide de refroidissement (38) ayant circulé dans chaque canal de refroidissement (100), comprenant un système d'étanchéité (110) configuré pour canaliser le fluide de refroidissement (38) entre ledit au moins un orifice d'entrée (35) et ledit au moins un canal de refroidissement (100) et canaliser le fluide de refroidissement (38) entre ledit au moins un canal de refroidissement (100) et ledit au moins un orifice de sortie (45), en prévenant l'entrée du fluide de refroidissement (38) dans un espace de réception (115) délimité à l'intérieur du carter (20) et dans lequel est reçu le stator (25), et dans laquelle le rotor (30) étant muni d'un ventilateur (105) agencé pour forcer la circulation du fluide de refroidissement (38) dans ledit au moins un canal de refroidissement (100) du fait de la rotation du rotor (30), dudit au moins un orifice d'entrée (35) vers ledit au moins un orifice de sortie (45), **caractérisée en ce que** : au moins un parmi ledit au moins un orifice d'entrée (35) étant ménagé dans un flasque (32) du carter (20) supportant le roulement d'entrée (85), au moins un parmi ledit au moins un orifice de sortie (45) étant ménagé dans l'arbre (80).

3. Machine électrique (10) selon la revendication 1 ou 2, **caractérisée en ce que** ledit au moins un orifice d'entrée (35) est situé d'un côté d'un plan transversal (52) perpendiculaire à l'axe central (C) et ledit au moins un orifice de sortie (45) est situé du côté opposé dudit plan transversal (52).

4. Machine électrique (10) selon l'une des revendication 1 à 3, **caractérisée en ce que** chaque canal de refroidissement (100) s'étend dans le circuit magnétique (95) du rotor (30).

5. Machine électrique (10) selon l'une quelconque des revendications précédentes, **caractérisée en ce que** chaque canal de refroidissement (100) s'étend sensiblement parallèlement à l'axe central (C).

6. Machine électrique (10) selon l'une quelconque des revendications précédentes, **caractérisée en ce que** le rotor (30) est muni d'une pluralité de canaux de refroidissement (100) régulièrement répartis autour de l'axe central (C).

7. Machine électrique (10) selon l'une quelconque des revendications précédentes, **caractérisée en ce que** le système d'étanchéité (110) comprend au moins un joint d'étanchéité sans contact (120) prévu entre le carter (20) et le rotor (30), le ou au moins un des joints d'étanchéité sans contact (120) étant de préférence un joint labyrinthe.

8. Machine électrique (10) selon la revendication 7, **caractérisée en ce qu'**un joint d'étanchéité sans contact (120) est disposé de manière à assurer l'étanchéité entre l'espace de réception (115) et un espace d'entrée (40) dans lequel débouchent ledit au moins un orifice d'entrée (35) et/ou un joint d'étanchéité sans contact (120) est disposé de manière à assurer l'étanchéité entre l'espace de réception (115) et un espace de sortie (50) dans lequel s'alimentent ledit au moins un orifice de sortie (45).

## Patentansprüche

1. Elektrische Maschine (10), die ein Gehäuse (20) einen fest im Inneren des Gehäuses (20) angebrachten Stator (25) und einen Rotor (30) umfasst, der eine Welle (80) umfasst, die im Inneren des Gehäuses (20) um eine Mittelachse (C) drehbar anbebracht ist, sowie einen von der Welle (80) getragenen Magnetkreis (95), wobei der Rotor (30) mit wenigstens einem, sich im Inneren des Rotors (30) erstreckenden Kühlkanal (100) versehen ist, wobei die elektrische Maschine (10) wenigstens eine Einlassöffnung (35) für den Einlass eines Kühlfluids (38) in das Innere des Gehäuses (20) zur Zirkulation in jedem Kühlkanal (100) umfasst und wenigstens eine Auslassöffnung (45) für den Auslass des Kühlfluids (38), das in jedem Kühlkanal (100) zirkuliert ist, aus dem Gehäuse (20) heraus,
umfassend ein Dichtungssystem (110), das dazu ausgebildet ist, das Kühlfluid (38) zwischen der wenigstens einen Einlassöffnung (35) und dem wenigstens einen Kühlkanal (100) zu kanalisieren und das Kühlfluid (38) zwischen dem wenigstens einen Kühlkanal (100) und der wenigstens einen Auslassöffnung (45) zu kanalisieren, wobei das Eindringen des Kühlfluids (38) in einen Aufnahmeraum (115) verhindert wird, der im Inneren des Gehäuses (20) begrenzt ist und in dem der Stator (25) aufgenommen ist, und wobei der Rotor (30) mit einem Lüfter (105) versehen ist, der dazu angeordnet ist, durch die Drehung des Rotors (30) die Zirkulation des Kühlfluids (38) in dem wenigstens einen Kühlkanal (100) von der wenigstens einen Einlassöffnung (35) zu der wenigstens einen Auslassöffnung (45) zu erzwingen, **dadurch gekennzeichnet, dass**
wenigstens eine der wenigstens einen Einlassöffnung (35) in der Welle (80) ausgebildet ist, wobei wenigstens eine der wenigstens einen Auslassöffnung (45) in einem Flansch (33) des Gehäuses (20) ausgebildet ist, der das Ausgangslager (90) trägt.

2. Elektrische Maschine (10), die ein Gehäuse (20), einen fest im Inneren des Gehäuses (20) angebrachten Stator (25) und einen Rotor (30) umfasst, der eine Welle (80) umfasst, die im Inneren des Gehäuses (20) um eine Mittelachse (C) drehbar angebracht ist, sowie einen von der Welle (80) getragenen Magnetkreis (95), wobei der Rotor (30) mit wenigstens einem, sich im Inneren des Rotors (30) erstreckenden Kühlkanal (100) versehen ist, wobei die elektrische Maschine (10) wenigstens eine Einlassöffnung (35) für den Einlass eines Kühlfluids (38) in das Innere des Gehäuses (20) zur Zirkulation in jedem Kühlkanal (100) umfasst und wenigstens eine Auslassöffnung (45) für den Auslass des Kühlfluids (38), das in jedem Kühlkanal (100) zirkuliert ist, aus dem Gehäuse (20) heraus,
umfassend ein Dichtungssystem (110), das dazu ausgebildet ist, das Kühlfluid (38) zwischen der wenigstens einen Einlassöffnung (35) und dem wenigstens einen Kühlkanal (100) zu kanalisieren und das Kühlfluid (38) zwischen dem wenigstens einen Kühlkanal (100) und der wenigstens einen Auslassöffnung (45) zu kanalisieren, wobei das Eindringen des Kühlfluids (38) in einen Aufnahmeraum (115) verhindert wird, der im Inneren des Gehäuses (20) begrenzt ist und in dem der Stator (25) aufgenommen ist, und wobei der Rotor (30) mit einem Lüfter (105) versehen ist, der dazu angeordnet ist, durch die Drehung des Rotors (30) die Zirkulation des Kühlfluids (38) in dem wenigstens einen Kühlkanal (100) von der wenigstens einen Einlassöffnung (35) zu der wenigstens einen Auslassöffnung (45) zu erzwingen, **dadurch gekennzeichnet, dass**:
wenigstens eine der wenigstens einen Einlassöffnung (35) in einem Flansch (32) des Gehäuses (20) ausgebildet ist, der das Eingangslager (85) trägt, und wenigstens eine der wenigstens einen Auslassöffnung (45) in der Welle (80) ausgebildet ist.

3. Elektrische Maschine (10) nach Anspruch 1 oder 2, **dadurch gekennzeichnet, dass** die wenigstens eine Einlassöffnung (35) auf einer Seite einer zur Mittelachse (C) senkrechten Querebene (52) angeordnet ist und die wenigstens eine Auslassöffnung (45) auf der gegenüberliegenden Seite der Querebene (52) angeordnet ist.

4. Elektrische Maschine (10) nach einem der Ansprüche 1 bis 3, **dadurch gekennzeichnet, dass** sich jeder Kühlkanal (100) im Magnetkreis (95) des Rotors (30) erstreckt.

5. Elektrische Maschine (10) nach einem der vorhergehenden Ansprüche, **dadurch gekennzeichnet, dass** sich jeder Kühlkanal (100) im Wesentlichen parallel zur Mittelachse (C) erstreckt.

6. Elektrische Maschine (10) nach einem der vorhergehenden Ansprüche, **dadurch gekennzeichnet, dass** der Rotor (30) mit einer Vielzahl von Kühlkanälen (100) versehen ist, die regelmäßig um die Mittelachse (C) verteilt sind.

7. Elektrische Maschine (10) nach einem der vorhergehenden Ansprüche, **dadurch gekennzeichnet, dass** das Dichtungssystem (110) wenigstens eine berührungslose Dichtung (120) umfasst, die zwischen dem Gehäuse (20) und dem Rotor (30) vorgesehen ist, wobei die oder wenigstens eine der berührungslosen Dichtungen (120) bevorzugt eine Labyrinthdichtung ist.

8. Elektrische Maschine (10) nach Anspruch 7, **dadurch gekennzeichnet, dass** eine berührungslose Dichtung (120) derart angeordnet ist, dass sie die Dichtigkeit zwischen dem Aufnahmeraum (115) und einem Einlassraum (40) gewährleistet, in den die wenigstens eine Einlassöffnung (35) mündet, und/oder dass eine berührungslose Dichtung (120) derart angeordnet ist, dass sie die Dichtigkeit zwischen dem Aufnahmeraum (115) und einem Auslassraum (50) gewährleistet, in den die wenigstens eine Auslassöffnung (45) mündet.

## Claims

1. Electric machine (10) comprising a casing (20), a stator (25) fixedly mounted inside the casing (20), and a rotor (30) comprising a shaft (80) rotatably mounted inside the casing (20) about a central axis (C) and a magnetic circuit (95) carried by the shaft (80), the rotor (30) being provided with at least one cooling channel (100) extending inside the rotor (30), the electric machine (10) comprising at least one inlet orifice (35) for the inlet of a cooling fluid (38) inside the casing (20) for circulation thereof in each cooling channel (100) and at least one outlet orifice (45) for the outlet, towards the outside of the casing (20), of the cooling fluid (38) having circulated in each cooling channel (100),
comprising a sealing system (110) configured to channel the cooling fluid (38) between said at least one inlet orifice (35) and said at least one cooling channel (100) and channel the cooling fluid (38) between said at least one cooling channel (100) and said at least one outlet orifice (45), preventing the cooling fluid (38) from entering a receiving space (115) delimited inside the casing (20) and wherein the stator (25) is received, and wherein the rotor (30) being provided with a fan (105) arranged to force the circulation of the cooling fluid (38) in said at least one cooling channel (100) due to the rotation of the rotor (30), from said at least one inlet orifice (35) to said at least one outlet orifice (45), **characterised in that**
at least one of said at least one inlet orifice (35) being formed in the shaft (80), at least one of said at least one outlet orifice (45) being formed in a flange (33) of the casing (20) supporting the outlet bearing (90).

2. Electric machine (10) comprising a casing (20), a stator (25) fixedly mounted inside the casing (20), and a rotor (30) comprising a shaft (80) rotatably mounted inside the casing (20) about a central axis (C) and a magnetic circuit (95) carried by the shaft (80), the rotor (30) being provided with at least one cooling channel (100) extending inside the rotor (30), the electric machine (10) comprising at least one inlet orifice (35) for the inlet of a cooling fluid (38) inside the casing (20) for circulation thereof in each cooling channel (100) and at least one outlet orifice (45) for the outlet, towards the outside of the casing (20), of the cooling fluid (38) having circulated in each cooling channel (100),
comprising a sealing system (110) configured to channel the cooling fluid (38) between said at least one inlet orifice (35) and said at least one cooling channel (100) and channel the cooling fluid (38) between said at least one cooling channel (100) and said at least one outlet orifice (45), preventing the cooling fluid (38) from entering a receiving space (115) delimited inside the casing (20) and wherein the stator (25) is received, and wherein the rotor (30) being provided with a fan (105) arranged to force the circulation of the cooling fluid (38) in said at least one cooling channel (100) due to the rotation of the rotor (30), from said at least one inlet orifice (35) to said at least one outlet orifice (45), **characterised in that**:
at least one of said at least one inlet orifice (35) being formed in a flange (32) of the casing (20) supporting the inlet bearing (85), at least one of said at least one outlet orifice (45) being formed in the shaft (80).

3. Electric machine (10) according to claim 1 or 2, **characterised in that** said at least one inlet orifice (35) is located on one side of a transverse plane (52) perpendicular to the central axis (C) and said at least one outlet orifice (45) is located on the opposite side of said transverse plane (52).

4. Electric machine (10) according to one of claims 1 to 3, **characterised in that** each cooling channel (100) extends in the magnetic circuit (95) of the rotor (30).

5. Electric machine (10) according to any one of the preceding claims, **characterised in that** each cooling channel (100) extends substantially parallel to the central axis (C).

6. Electric machine (10) according to any one of the preceding claims, **characterised in that** the rotor (30) is provided with a plurality of cooling channels (100) evenly distributed about the central axis (C).

7. Electric machine (10) according to any one of the preceding claims, **characterised in that** the sealing system (110) comprises at least one contactless seal (120) provided between the casing (20) and the rotor (30), the or at least one of the contactless seals (120) being preferably a labyrinth seal.

8. Electric machine (10) according to claim 7, **characterised in that** a contactless seal (120) is disposed so as to ensure sealing between the receiving space (115) and an inlet space (40) into which said at least one inlet orifice (35) opens and/or a contactless seal (120) is disposed so as to ensure sealing between the receiving space (115) and an outlet space (50) at which said at least one outlet orifice (45) feeds.
